# EUROPÄISCHE PATENTSCHRIFT

(11) **EP 4 289 672 B1**
(45) Veröffentlichungstag und Bekanntmachung des Hinweises auf die Patenterteilung: **01.04.2026**
(21) Anmeldenummer: 23000085.3
(22) Anmeldetag: 05.06.2023
(51) Int. Cl.: B60R 7/04, B60N 3/10

(54) **FAHRZEUGABLAGEFACHTEILER UND KRAFTFAHRZEUGABLAGE MIT EINEM SOLCHEN FAHRZEUGABLAGEFACHTEILER**
VEHICLE STORAGE COMPARTMENT DIVIDER AND MOTOR VEHICLE STORAGE COMPRISING SUCH A VEHICLE STORAGE COMPARTMENT DIVIDER
SÉPARATEUR DE COMPARTIMENT DE RANGEMENT DE VÉHICULE ET COMPARTIMENT DE RANGEMENT DE VÉHICULE AUTOMOBILE DOTÉ D'UN TEL SÉPARATEUR DE COMPARTIMENT DE RANGEMENT DE VÉHICULE

(30) Priorität: 06.06.2022 DE 202022001315 U
(43) Veröffentlichungstag der Anmeldung: 13.12.2023
(73) Patentinhaber: Yilmaz, Akiska, 44628 Herne (DE)
(72) Erfinder: Yilmaz, Akiska, 44628 Herne (DE)

(56) Entgegenhaltungen:
- DE-A1- 102017 215 042
- JP-A- 2006 312 340
- US-A1- 2011 074 173

## Beschreibung

Die vorliegende Erfindung bezieht sich auf einen Fahrzeugablagefachteiler und eine Kraftfahrzeugablage mit einem solchen Fahrzeugablagefachteiler.

Innerhalb von Kraftfahrzeugen, insbesondere motorisierten Landfahrzeugen mit vier Rädern, sind im Kofferraum oder Fahrgastraum sogenannte Ablagen aller Größen und Formen bereitgestellt, um eine Vielzahl von Gegenständen zu lagern. Einige dieser Ablagen sind an einer Armlehne, Türverkleidung, Hutablage oder einer Mittelkonsole des Kraftfahrzeugs feststehend montiert oder können variabel - zum Beispiel auf einem Armaturenbrett - eingesetzt werden. Um insbesondere kleinteilige und leichte Gegenstände sicher zu verstauen, sind solche Ablagen als Fach mit Bodenteil und Seitenwänden gestaltet, die ein Herausfallen oder Herausrutschen während der Fahrt oder bei einem Bremsvorgang vermeiden sollen.

Gerade bei einem großen Ablagefach oder tiefgezogenen Konsolenablagefächern innerhalb eines Automobils fehlt es an der notwendigen Ordnung der darin gelagerten Kleinteile, wie Münzen, Brillen, Sonnenbrillen, Kartenmaterial, Ladekabel, Handy, Schlüssel und dergleichen, um die gesuchte Sache schnell zu finden. Ein Ablagefachteiler unterteilt solche Ablagefächer dabei in kleinere abgeteilte Stauräume und erleichtert das Auffinden von Kleinteilen meist sehr.

Eine aus der DE 20 2005 003 636 U1 bekannte Trennwand kann als Ablagefachteiler in das Ablagefach eingeschoben werden, um Gebrauchsgegenstände wie einen Getränkebehälter festzuhalten. Eine Trennwand ist dabei in Aussparungen in den Seitenwänden abgestützt, die nur eine durch die Lage der Aussparungen vorbestimmte Unterteilung des Ablagefachs erlauben. Diese wenig variable Stauraumteilung genügt somit nur für standardisierte Gebrauchsgegenstände mit meist vorgegebenen Abmessungen wie eine Getränkedose oder -flasche.

Die JP 2006 312340 A offenbart eine Türtasche mit einer Trennplatte zum Unterteilen der Türtasche. Die Trennplatte hat ein angesetztes Einführungsstück, das in ein an einer Innenwandfläche der Türtasche vorgesehenes Einführungsloch eingeführt wird. Dieses Einführungsloch gibt die Lage der Trennplatte innerhalb der Türtasche vor, verringert den Stauraum innerhalb der Türtasche und der das Einführungsloch bereitstellende Montagesitz kann bei Einbringen von Gegenständen in die Türtasche beschädigt/abgebrochen werden.

Die DE 10 2017 215042 A1 beschreibt eine Aufbewahrungsvorrichtung für ein Fahrzeug mit einem Ladungsteilungsmittel zum Erzeugen von Ladungsräumen innerhalb einer Fahrzeugkonsole, welches ein Befestigungsmittel und ein Koppelelement aufweist, wobei das Befestigungsmittel eine Führung mit einer Vielzahl von Nuten bereitstellt und der Ladungsraum durch Einführen des Koppelelements in verschiedene Nuten veränderlich ist. Auch hier ist die Größe und Form des Ladungsraums durch die Führung vorbestimmt, die Variabilität beschränkt und die an den Innenseiten der Konsole angebrachten Führungen verringern den Stauraum und könnten beschädigt werden.

Aufgabe der vorliegenden Erfindung ist es, einen Fahrzeugablagefachteiler mit technisch einfachen Mitteln derart zu verbessern, dass vorstehend genannte Nachteile vermieden werden.

Diese Aufgabe wird mit den Merkmalen des Hauptanspruchs gelöst.

An einem innerhalb eines Fahrzeugablagefachs einzubringenden Fachteiler ist eine Klemmvorrichtung als Halteelement angebracht. Das Halteelement weist dafür einen Steg auf, der nach dem Einbringen des Fachteilers in das Ablagefach ein Randstück - etwa einen Teil der Seitenwand - überdeckt. Am Stegende ist ein Arm angebracht, wobei in Gebrauchsstellung des erfindungsgemäßen Fahrzeugablagefachteilers das Randstück des Ablagefachs zwischen Anlagefläche und einer zur Anlagefläche weisenden Seite des Arms gehalten wird.

Die reversible Klemmwirkung auf das Randstück des Fahrzeugablagefachs entsteht nun dadurch, dass in Gebrauchsstellung beim Einbringen des Randstücks in das Halteelement zum Beispiel der Arm von der Anlagefläche weggedrückt wird und dabei ein Abstand von einer zur Anlagefläche weisenden Seite des Arms zur Anlagefläche vergrößert ist, wobei Klemmkräfte zum Beispiel in Form von Rückstellkräften auf das Randstück einwirken. Diese Rückstellkräfte entstehen dabei erfindungsgemäß durch Speicherung von Verformungsenergie im Steg. Auch können Verformungen des Fachteilers oder des Arms auftreten. Die reversibel gespeicherte Verformungsenergie wird erfindungsgemäß zu mindestens 50%, etwa 75% bis zu etwa 100% im Steg gespeichert.

Vorteilhafter Weise bilden Anlagefläche und Seite statt punktueller Kontakte mit dem Randstück eine Kontaktfläche aus. Dazu kann es vorgesehen sein, dass die Anlagefläche, der Steg und der Arm je einen Teil eines u-förmig gebogenen Federstahls sind. An einem U-Schenkel könnte der Fachteiler angebracht sein.

Eine vorteilhafte Weiterbildung sieht vor, dass der Steg des Halteelements aus einem dauerelastischen Material hergestellt ist, vorgespannt und bei Veränderung des Abstands zwischen der Anlagefläche und der gegenüberliegenden Seite reversibel verformbar ist. Im Falle des u-förmig gebogenen Federstahls verkleinert sich der Biegewinkel am Steg, da das "U" aufgebogen oder aufgeweitet wird. Bei elastischer Verformung des Federstahls entsteht zwischen den U-Schenkeln somit eine auf das Randstück wirkende Klemmkraft. Der Fachteiler wird somit zeitweise oder zeitlich begrenzt am Fahrzeugablagefach festgesetzt. Der Mechanismus des Halteelements erinnert dabei vom Prinzip her an eine Papierklammer.

Der Arm des Halteelements oder/und der Fachteiler kann an dem Steg drehbar gelagert sein und von einem am Steg angeordneten Lager geführt sein. Eine Feder spannt dabei die Anlagefläche gegen den Arm vor, wobei der Arm oder der Fachteiler mit einer Handhabe versehen ist. In einer Ungebrauchtstellung drückt die Feder die Anlagefläche des Fachteilers gegen die Seite des Arms oder umgekehrt. Der Abstand ist zumindest an einem gemeinsamen Kontaktpunkt somit etwa null oder nahe null. Bei Druck auf die Handhabe wird per Krafteinwirkung der Arm oder der Fachteiler um das Lager gedreht und der Abstand zur Anlagefläche verändert und beim Einsetzen des Randstücks vergrößert. Ist der Abstand genügend groß, insbesondere gleich oder größer als eine Breite des Randstücks der Fahrzeugablage- sprich der Wandstärke der Seitenwand, kann das Randstück zwischen Anlagefläche und Seite eingebracht werden. Wird die Krafteinwirkung auf die Handhabe dann beseitigt, drückt die Feder zum Beispiel die Anlagefläche des Haltelements gegen die Innenseite der Seitenwand und die Außenseite der Seitenwand des Fahrzeugablagefachs wird gegen die gegenüberliegende Seite des Arms gedrückt.

Eine vorteilhafte Weiterbildung der vorliegenden Erfindung sieht vor, dass die Feder um das Lager herum angeordnet ist und der Fachteiler einen um das Lager drehbaren Finger umfasst, dessen freies Ende von der Feder gegen den Arm gedrückt wird. Die Verformungsenergie wird von der Feder im Steg gespeichert und bildet in Gebrauchsstellung selbst keine sichtbaren Verformungen mehr aus. Der Finger und die Feder sind vom Steg optisch abgedeckt und in Gebrauchsstellung kaum bis gar nicht sichtbar. Das freie Ende des Fingers stützt sich dabei wieder an der Innenseite des Randstücks der Kraftfahrzeugablage ab. Der am Steg angeformte Arm wird an die Außenseite herangezogen und es entsteht wiederum die Klemmwirkung zum Festsetzen des Fachteilers an der vom Benutzer gewünschten Stelle. Da die Klemmwirkung auch zeitweise aufgehoben werden kann, ist der Fachteiler sehr variabel und individuell innerhalb der Kraftfahrzeugablage zu positionieren und viele unterschiedlich große Stauräume bereitzustellen.

Manche Kraftfahrzeugablagen sind im Bereich einer Ablageöffnung aus Stabilitätsgründen gefalzt oder gebördelt und weisen einen innerhalb der Ablage nach innen weisenden, umlaufenden Kragen auf. Der Steg hat nach einer Weiterbildung der Erfindung einen kreisförmigen oder ovalen Querschnitt und ist zumindest teilweise flächig ausgebildet, wobei in Gebrauchsstellung des Fahrzeugablagefachteilers der Steg einen Teil des Kragens vom Randstück umgreift. Die Klemmwirkung des Stegs am Kragen führt hierbei zu einer erhöhten Rutschfestigkeit und sorgt für eine ortsfeste Positionierung an der Kraftfahrzeugablage.

Eine vorteilhafte Weiterbildung des Fahrzeugablagefachteilers sieht vor, dass das Haltelement von einem ersten Halteelementteil und einem zweiten Halteelementteil gebildet ist. Das erste Haltelementteil ist in Gebrauchsstellung am Randstück des Kraftfahrzeugablagefachs festzusetzen, beispielsweise am Seitenwandrand, und weist einen Schienenkopf oder eine Nut auf. Die Nut oder der Schienenkopf erstreckt sich nach Befestigen am Kraftfahrzeugablagefach entlang des Randstücks. Dieses Randstück kann zum Beispiel die Seitenwand des Fahrzeugablagefachs sein. Das zweite Halteelementteil ist an dem Fachteiler angebracht und kann mittels des Stegs und des Arms des Haltelements an dem Schienenkopf oder der Nut per Klemmung festgesetzt werden. Die Nut und der Schienenkopf dienen als Führung beim Versetzen des Fachteilers innerhalb des Ablagefachs. Der erfindungsgemäße Fahrzeugablagefachteiler bleibt in Gebrauchsstellung meist immer mit der Nut oder dem Schienenkopf verbunden und kann bei fehlender Klemmung oder Aufheben der Klemmung frei verschoben werden. Die Fachteilung ist somit variabel ohne dass der Fachteiler selbst "lose" ist und insbesondere ohne Anbindung an das Kraftfahrzeugablagefach im Fahrzeug verloren gehen kann.

Der erfindungsgemäße Schienenkopf kann am oberen Rand des Kraftfahrzeugablagefachs angeordnet werden, wobei die Anlagefläche, dann der Steg und schließlich der Arm den Schienenkopf teils form- und kraftschlüssig umfassen. In Gebrauchsstellung tritt dann die Klemmwirkung wie vor beschrieben auf und der Fahrzeugablagefachteiler ist festgesetzt. Bei der Nut greift beispielsweise ein Stück der Anlagefläche des Fachteilers verschiebbar in die Nut ein und sorgt für eine Längsführung beim Verschieben des Fachteilers. Mittels der Klemmwirkung kann ein anderer Teil der Anlagefläche gegen das Randstück gedrückt und festgeklemmt werden.

Eine vorteilhafte Gestaltung des Fahrzeugablagefachteilers ergibt sich, wenn ein Fachteiler mehrteilig ausgebildet ist. Die Bestandteile des Fachteilers ermöglichen nach dieser Erfindung eine Breitenanpassung des Fachteilers an das Fahrzeugablagefach. Mittels eines Federelements, dass mit einem Federende an einem ersten Fachteilersegment angesetzt ist und ein anderes Federende des Federelements mit dem letzten Fachteilersegment verbunden ist, kann per Spannen oder per Entspannen des Federelements der Fachteiler zusammengeklappt oder auseinandergefaltet werden, wodurch seine Breite veränderlich ist. Der Fachteiler kann so an verschieden dimensionierte Fahrzeugablagefächer, insbesondere Fachbreiten, angepasst werden.

Der aus Fachteilersegmenten zusammengesetzte Fachteiler kann dabei auch so gestaltet sein, dass aufeinanderfolgende Fachteilersegmente hohl und unterschiedlich groß sind und so ineinandergeschoben werden können. Das vorbeschriebene Federelement drückt dann die Fachteilersegmente auseinander, die hierbei teilweise überlappend ineinanderstecken.

Eine Ausführungsform ist derart gestaltet, dass ein Fachteilersegment mit einer Gewindestange so verbunden ist, dass die Gewindestange bei einer Drehung in eine Drehrichtung ihren Abstand zu einem an der Gewindestange angeordneten Handteil verkürzt und bei Drehung in gegenläufiger Drehrichtung ihren Abstand zum Handteil verlängert, so dass durch eine Betätigung des Handteils eine Drehbewegung der Gewindestange entsteht und dabei die Breite des segmentierten Fachteilers variiert. Auch kann durch die Breiteneinstellung des Fachteilers eine Klemmwirkung gegen das Randstück des Fahrzeugablagefachs erzeugt werden.

Dem Fachmann ist klar, dass verschiedene Automobilhersteller und verschiedene Modelle der Hersteller sehr unterschiedlich dimensionierte Kraftfahrzeugablagen verwenden. Die erfindungsgemäßen Fahrzeugablagefachteiler können hersteller- oder modellspezifisch hergestellt sein. Eine vorteilhafte Ausführungsform lässt sich an die Kraftfahrzeugablage anpassen, wenn der Fachteiler mindestens eine in Längsrichtung und/oder in Querrichtung zur Anlagefläche des Fachteilers verlaufende Sollbruchstelle aufweist, zum vorbestimmten Abbrechen eines Fachteilerstücks und zum Verkleinern des Fachteilers. Dabei kann auch eine veränderte Außenlinie des Fachteilers von zum Beispiel rechteckig auf halbkreisförmig erzielbar sein.

Fertigungstechnisch ist es für eine kostengünstige Massenfertigung der erfindungsgemäßen Fahrzeugablagefachteiler denkbar, wenn an einen Steg mit angeformtem Arm ein Fachteiler zum Beispiel im Spritzgussverfahren angesetzt ist. Auch ein separat an den Steg anzubringender Fachteiler und/oder ein vom Benutzer auszutauschender Fachteiler ist hier möglich.

Der Arm des Haltelements und/oder der Fachteiler wirkt wie eine Art von Wäsche- oder Papierklammer und wird erfindungsgemäß beim Festsetzen des Fachteilers mittels Einschiebens des Randstücks zwischen Anlagefläche und Seite weggedrückt. Um das Einschieben zu erleichtern, ist bei einer Ausführungsform der Erfindung der Fachteiler, der Finger oder der Arm, am freien Ende mit einem Anlauf ausgestattet. Beispielsweise kann der Anlauf am Arm von der Anlagefläche des Fachteilers weggebogen sein.

Um einen starken Halt des Fachteilers innerhalb des Fahrzeugablagefachs zu gewährleiten, kann es vorgesehen werden, dass die Anlagefläche, zumindest eine zur Anlagefläche weisende Stegfläche, die Seite des Arms oder das freie Ende des Fingers mit einem rutschhemmenden Material belegt ist. Dabei kann eine noppen-, streifen- oder wellenartige Oberflächenstruktur geschaffen werden, die das Rutschen praktisch verhindert und zudem ein Verkratzen des Ablagefachs und seiner Sichtflächen vermeidet.

Der Arm des Haltelements "umgreift" in Verbindung mit dem Steg das Randstück des Fahrzeugablagefachs. Der Steg und/oder der Arm können vorteilhaft aus einem transparenten Material hergestellt sein und so optisch wenig sichtbar werden. Auch können Farbgebung und Muster des Stegs oder des Arms als Designelement dienen.

Es ist eine weitere Aufgabe der vorliegenden Erfindung, eine Kraftfahrzeugablage mit variabler Fachteilung anzugeben. Diese Aufgabe wird mit den Merkmalen des Anspruchs 13 gelöst.

Die Erfindung wird anhand von Ausführungsbeispielen mit Bezug auf die beiliegenden Zeichnungen näher beschrieben.

In den Zeichnungen zeigen:
Fig. 1 eine schematische Ansicht eines ersten Ausführungsbeispiels eines erfindungsgemäßen Fahrzeugablagefachteilers in Gebrauchsstellung und eine Kraftfahrzeugablage mit einem solchen Fahrzeugablagefachteiler nach dieser Erfindung;
Fig. 2 eine Seitenansicht eines zweiten Ausführungsbeispiels des Fahrzeugablagefachteilers;
Fig. 3 eine weitere Seitenansicht eines dritten Ausführungsbeispiels eines erfindungsgemäßen Fachteilers vor Ingebrauchnahme;
Fig. 4a eine teilgeschnittene Seitenansicht eines weiteren Ausführungsbeispiels;
Fig. 4b ein Ausführungsbeispiel des Fahrzeugablagefachteilers in Gebrauchsstellung; und
Fig. 5 eine Seitenansicht eines Ausführungsbeispiels eines erfindungsgemäßen Fahrzeugablagefachteilers in Montagestellung.

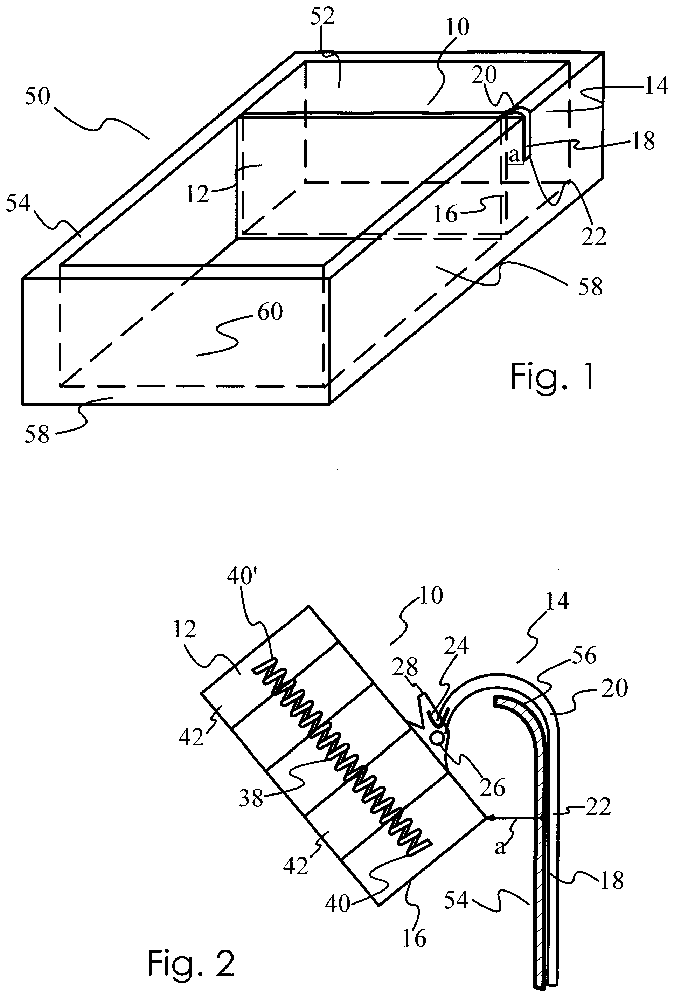

Soweit im Folgenden nichts anderes gesagt ist, bezieht sich die nachfolgende Beschreibung stets auf alle Ausführungsbeispiele der Figuren 1 bis 5, wobei gleiche Bezugszeichen dieselben konstruktiven Merkmale beschreiben.

Figur 1 zeigt eine Kraftfahrzeugablage 50 mit vier Seitenwänden 58 und einem Bodenteil 60, welche im Inneren eines motorangetriebenen Automobils, zum Beispiel in einer Mittelkonsole, eingebaut ist. Ein Randstück 54 der Kraftfahrzeugablage 50 ist beim Anbringen an einer Fahrzeugtürinnenseite meist von deren Verkleidung gebildet. Solche Kraftfahrzeugablagen 50 nehmen eine Vielzahl unterschiedlich großer und verschieden schwerer Gebrauchsgegenstände auf, die im Stauraum 52 leicht verrutschen und bei harten Bremsmanövern sogar aus dem Stauraum 52 herausgeschleudert werden können.

Mit einem Fahrzeugablagefachteiler 10 mit einem Fachteiler 12 zum zumindest teilweisen Abteilen eines verkleinerten Stauraums 52 innerhalb einer Kraftfahrzeugablage 50 ist eine wesentlich sicherere Lagerung solcher Kleinteile möglich, die zudem leichter und schneller auffindbar sind. Insbesondere wird ein Fahrer bei der Suche nach dem in der Ablage befindlichen Gebrauchsgegenstand kürzer abgelenkt.

Der einteilige Fachteiler 12 ist zum zeitweisen Festsetzen an dem Randstück 54 der Kraftfahrzeugablage 50 an seiner Kurzseite mit einem Halteelement 14 ausgestattet. Eine Anlagefläche 16 ist von dem Halteelement 14 bereitgestellt und dient zum Ansetzen des Fachteilers 12 aus Kunststoff an dem Randstück 54. Der Fachteiler 12 ist hier in etwa so lang wie das Ablagefach breit ist und kann sich auch schräg oder in Längsrichtung zur in Figur 1 gezeigten Langseite der Kraftfahrzeugablage 50 erstrecken.

Ein Steg 20 des Halteelements 14 schließt sich an die Anlagefläche 16 an und verläuft in etwa parallel zum Fachteiler 12. In der hier gezeigten Gebrauchsstellung des Fahrzeugablagefachteilers 10 überdeckt der metallene Steg 20 das Randstück 54 und ist dauerelastisch verformbar. Ein Arm 22 ist an den Steg 20 angeformt, wobei ein Abstand a zwischen der Anlagefläche 16 und einer zur Anlagefläche 16 gegenüberliegenden Seite 18 des Arms 22 vorbestimmt ist. Beim Einsetzen des Randstücks 54 zwischen die Anlagefläche 16 und den Arm 22 vergrößert sich dieser Abstand a. Der Steg 20 verformt sich dabei reversibel und speichert eine Verformungsenergie, die wiederum die Anlagefläche 16 und die Seite 18 gegeneinanderdrückt. In der gezeigten Gebrauchsstellung entsteht so eine gegen die Außenseiten der Seitenwand 58 wirkende Klemmkraft des Haltelements 14, die den erfindungsgemäßen Fahrzeugablagefachteiler 10 kraftschlüssig am Einbauort festhält und einen fast frei wählbaren Stauraum 52 definiert.

Der Steg 20 des Halteelements 14 ist aus einem dauerelastischen Material hergestellt und kann auch aus einem Kunststoffmaterial gespritzt sein. Der Steg 20 ist hierbei vorgespannt, da in nicht montierter Position der Arm 22 bereits punktuell gegen die Anlagefläche 16 anliegt. Bei Veränderung des Abstands a, insbesondere beim Einbau oder in Montagestellung, ist der Steg 20 reversibel verformbar und speichert so eine Rückstellkraft.

Bei dem in Figur 2 gezeigten Fahrzeugablagefachteiler 10 ist ein Lager 26 von dem Steg 20 bereitgestellt. Der Arm 22 des Halteelements 14 und der Fachteiler 12 sind daran drehbar gelagert. Fachteiler 12 und Arm 22 sind von einer Feder 24 so vorgespannt, dass sich in Ruhestellung im unmontierten Zustand die Anlagefläche 16 und die Seite 18 des Arms 22 berühren. Der Arm 22 oder der Fachteiler 12 ist mit einer Handhabe 28 versehen, die dazu ausgebildet ist, den Arm 22 und/oder den Fachteiler 12 bei Betätigung im Uhrzeigersinn zu drehen, wobei der Abstand a veränderlich - hier vergrößert - ist. Der Abstand a wird dabei wie gezeigt so vergrößert, dass nach Ansetzen des Arms 22 an der Außenseite des Randstücks 54 der Fachteiler 12 so weit davon weggeschwenkt ist, dass der Steg 20 an einem Kragen 56 des Ablagefachs anlegbar ist und die Anlagefläche daran vorbeigeführt werden kann, um den mehrteiligen, aus Leichtmetall gefertigten Fachteiler 12 innerhalb des Ablagefachs einzubringen. Danach kann die Handhabe 28 entlastet werden und der Fachteiler 12 schwenkt gegen das Randstück 54. Die Feder 24 mit dem Steg 20 sorgt für genügend Klemmkraft, um den Fachteiler 12 rutschfest festzusetzen.

Der hier gezeigte mehrteilige Fachteiler 12 ist mittels Spannens oder mittels Entspannens eines Federelements 38 in seiner Breite veränderlich. Der Fachteiler 12 ist aus einer Mehrzahl von Fachteilersegmenten 42 gebildet, die gegeneinander verschiebbar sind und durch ein nicht näher gezeigtes Gesperre dauerhaft miteinander verbunden sind.

Das Federelement 38 ist mit einem Federende 40 am ersten Fachteilersegment 42 angesetzt und ein anderes Federende 40' des Federelements 38 ist mit dem letzten Fachteilersegment 42 verbunden, wobei der Fachteiler 12 auseinandergedrückt ist und sich in Gebrauchsstellung an einem anderen Randstück 54 oder der gegenüberliegenden Seitenwand 58 der Kraftfahrzeugablage 50 abstützt. Auch hierbei wird die Klemmkraft des Haltelements 14 gegen das Randstück 54 erhöht.

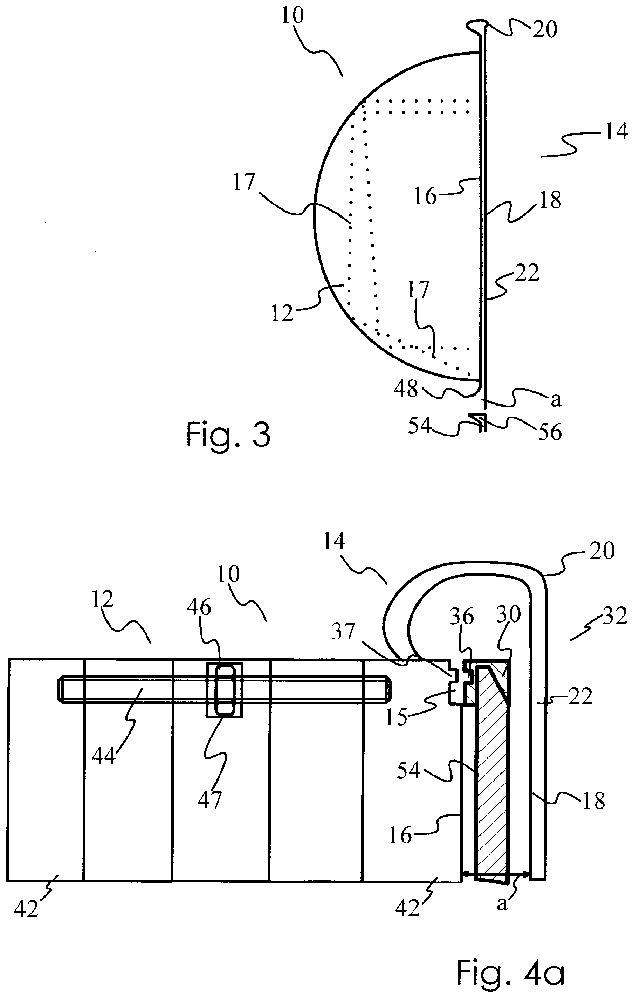

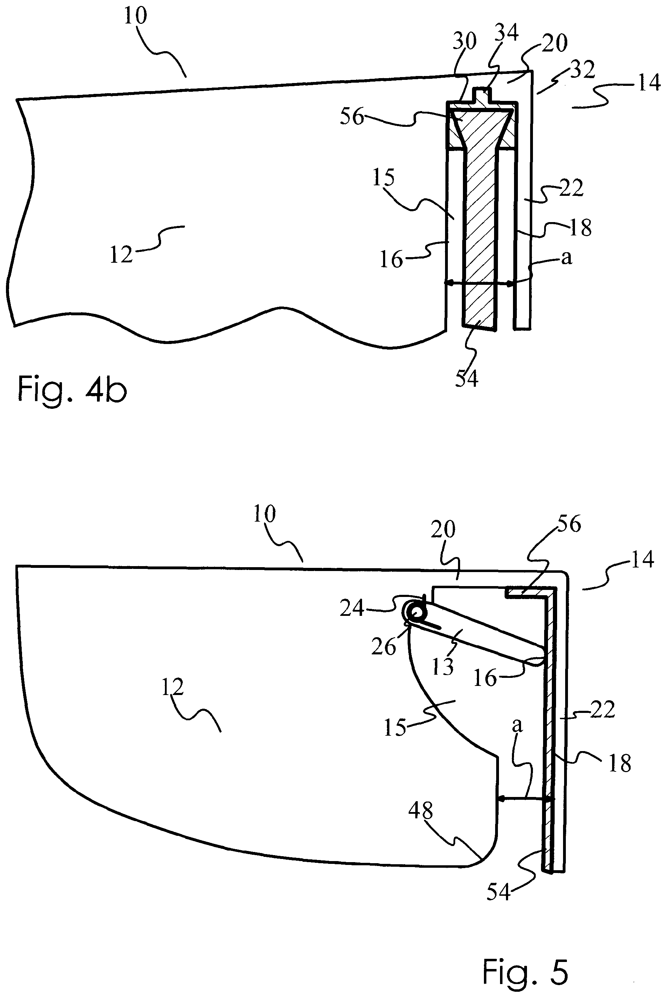

Insbesondere die Figur 3 zeigt einen Fahrzeugablagefachteiler 10 mit einem in etwa kreisförmigen Steg 20, der auch einen ovalen Querschnitt aufweisen kann. Zur Vergrößerung einer Kontaktfläche mit dem Randstück 54 ist der Steg 20 hierbei zumindest teilweise flächig ausgebildet. In Gebrauchsstellung des Fahrzeugablagefachteilers 10 umgreift der Steg 20 einen Teil des in Richtung Stauraum 52 verlaufenden Kragens 56 vom Randstück 54. Das Randstück 54 der Seitenwand 58 der Kraftfahrzeugablage 50 kann aber auch einen T-förmigen Querschnitt - siehe Figur 4b - oder einen auswärts verlaufenden Kragen 56 aufweisen, wobei der ovale Querschnitt des Stegs 20 formschlüssig anzulegen ist. Der Abstand a zwischen Anlagefläche 16 und gegenüberliegender Seite 18 des Fahrzeugablagefachteilers 10 ist hierbei sehr gering. Beim Aufstecken auf die Seitenwand 58 wird der Abstand a vergrößert und - wie gut in Figur 4a zu sehen - ist der Steg 20 deformiert. Der Arm 22 ist hierbei in etwa so lang gestaltet wie der Fachteiler 12 tief ist. So bildet sich eine maximal große Anlagefläche 16 aus und die Klemmkräfte verteilen sich großflächig.

Der Fachteiler 12 kann rechteckig, vieleckig oder - wie in Figur 3 gezeigt - rund geformt sein. Der Fachteiler 12 ist hier einteilig mit dem Haltelement 14 verbunden, kann aber auch austauschbar an dem Halteelement 14 angebracht werden. So können unterschiedliche Querschnitte der Kraftfahrzeugablage 50 abgedeckt werden. Alternativ weist der Fachteiler 12 mindestens eine in Längsrichtung und/oder in Querrichtung zur Anlagefläche 16 verlaufende Sollbruchstelle 17 auf, zum vorbestimmten Abbrechen eines Fachteilerstücks und zum Verkleinern des Fachteilers 12. Auch hierdurch ist eine modellspezifische Anpassung an die Kraftfahrzeugablage 50 möglich.

Bei dem in Figur 4a gezeigten, erfindungsgemäßen Fahrzeugablagefachteiler 10 ist das Haltelement 14 von einem ersten Halteelementteil 30 und einem zweiten Halteelementteil 32 gebildet. Das Randstück 54 der Seitenwand 58 läuft zum Rand hin spitz zu, wobei das erste Haltelementteil 30 in Gebrauchsstellung am Randstück 54 des Kraftfahrzeugablagefachs 50 durch die Klemmkräfte festzusetzen ist. In diesem Ausführungsbeispiel weist dieses erste Halteelementteil 30 eine Nut 36 auf, die sich nach Befestigen am Kraftfahrzeugablagefach 50 entlang des Randstücks 54 erstreckt.

In die Nut 36 ist der Fachteiler 12 mittels des zweiten Halteelementteils 32, dass den Steg 20 und den Arm 22 umfasst, per Klemmung innerhalb des Ablagefachs anzusetzen. Die Nut 36 passt dabei formschlüssig in eine Aussparung 15 des Fachteilers 12. Die per Deformation des Stegs 20 gespeicherten Verformungskräfte wirken zwischen Anlagefläche 16 und gegenüberliegender Seite 18 auch auf das erste Halteelementteil 30 und drücken einen Zapfen 37 des Fachteilers 12 in die Nut 36. Der Fachteiler 12 des Fahrzeugablagefachteilers 10 ist innerhalb der Ablage geführt zu verschieben.

Der in Figur 4a gezeigte mehrteilige Fachteiler 12 ist aus ineinander schiebbaren Fachteilersegmenten 42 aus Hartplastik zusammengesetzt. Eines der Fachteilersegmente 42 ist dabei mit einer Gewindestange 44 so verbunden, dass die Gewindestange 44 bei einer Drehung in eine Drehrichtung ihren Abstand/Entfernung b zu einem an der Gewindestange 44 angeordneten Handteil 46 verkürzt. Das gezeigte Handteil 46 ist über eine Öffnung 47 im mittleren Fachteilersegment 42 bedienbar. Bei Drehung in gegenläufiger Drehrichtung verlängert sich der Abstand/Entfernung b zum Handteil 46, so dass durch eine Betätigung des Handteils 46 eine Drehbewegung der Gewindestange 44 entsteht und dabei die Breite des Fachteilers 12 variiert. Vor dem Einsetzen des Fachteilers 12 innerhalb der Kraftfahrzeugablage 50 kann so die Breite verringert werden, bis der Fachteiler 12 hineinpasst. Danach kann durch Breitenvergrößerung eine Anpassung an das Ablagefach erzielt werden oder es können zusätzliche Druck- und Klemmkräfte auf das Randstück 54 ausgeübt werden.

Der Steg 20 und der Arm 22 sind in Gebrauchsstellung des Fahrzeugablagefachteilers 10 immer sichtbar außerhalb der Kraftfahrzeugablage 50 angeordnet. So kann es schon aus ästhetischen Gründen sinnvoll sein, den Arm 22 - wie in Figur 1 gezeigt - kurz und flach zu gestalten und auch den Steg 20 aus einem transparenten Material herzustellen. Geeignete Materialien umfassen Polyester, Polycarbonate oder polyethylenhaltige Polymere.

Die in Figur 4b gezeigte Variante des erfindungsgemäßen Fahrzeugablagefachteilers 10 umfasst ebenso ein zweiteiliges Halteelement 14, wobei das erste Haltelementteil 30 mit einem Schienenkopf 34 ausgestattet ist. Der Steg 20 des zweiten Halteelementteils 32 wird dabei geführt und verschiebt sich "wie auf Schienen" bei Verlagerung des Fachteilers 12. Der Steg 20 umgreift hierbei wiederum auch das erste Haltelementteil 30, das auf einem "T"-förmigen Randstück 54 aufgesetzt ist. Durch Vergrößerung des Abstands a wird der Steg 20 deformiert und die Verformungskräfte wirken als Klemmkräfte sowohl auf das erste Halteelementteil 30 wie auch auf das Randstück 54. Der Fachteiler 12 ist somit zeitweise ortsfest am Randstück 54 festgeklemmt.

Der in Figur 5 gezeigte Fahrzeugablagefachteiler 10 nach der vorliegenden Erfindung weist einen verdeckten Klemmmechanismus auf. Dazu ist die Feder 24 um das Lager 26 herum angeordnet und der Fachteiler 12 umfasst einen um das Lager 26 drehbaren Finger 13, dessen freies Ende von der Feder 24 gegen den Arm 22 gedrückt ist. Der Steg 20 verdeckt diesen Finger 13 großenteils, der in Gebrauchsstellung die Anlagefläche 16 des Haltelements bildet. Durch die Feder 24 drückt der Finger 13 gegen die Innenseite des Randstücks 54, wobei der am Steg 20 angeformte Arm 22 als Widerlager dient. Beim Einsetzen wird die Deformationsenergie vom Steg 20 mittels der Feder 24 gespeichert. Die Schwenkbewegung des Fingers 13 wird durch die Aussparung 15 im Fachteiler 12 möglich. Mit Veränderung des Abstands a wird beim Einsetzen des Randstücks 54 in den Fahrzeugablagefachteiler 10 die Feder 24 im Steg 20 gespannt. Die Federspannung ist die gespeicherte Verformungsenergie und bildet die Klemmkraft zwischen Anlagefläche 16 und gegenüberliegender Seite 18 des Arms 22 aus.

Um das Einsetzen des Randstücks 54 zu erleichtern weisen der Fachteiler 12, der Finger 13 am freien Ende oder der Arm 22 einen Anlauf 48 auf. Diese Rundung drückt einen Teil des Fahrzeugablagefachteilers 10 beim Einsetzen des Randstücks 54 weg.

Die Anlagefläche 16, zumindest eine zur Anlagefläche 16 weisende Stegfläche, die Seite 18 des Arms 22 oder auch das freie Ende des Fingers 13 sind mit einem rutschhemmenden Material belegt, um ein ungewolltes, ungesteuertes Verrutschen des Fahrzeugablagefachteilers 10 zu verhindern.
Die Erfindung lehrt einen technisch einfach, kostengünstig und massenhaft herzustellenden Fahrzeugablagefachteiler, der individuell eingesetzt, entfernt und verschoben werden kann, um einen variablen Stauraum in einem vorbestimmten Ablagefach, insbesondere innerhalb eines Fahrgastraums eines Personenkraftwagens, bereitzustellen.

### Bezugszeichenliste

- 10: Fahrzeugablagefachteiler
- 12: Fachteiler
- 13: Finger
- 14: Halteelement
- 15: Aussparung
- 16: Anlagefläche
- 17: Sollbruchstelle
- 18: Seite
- 20: Steg
- 22: Arm
- 24: Feder
- 26: Lager
- 28: Handhabe
- 30: erstes Halteelementteil
- 32: zweites Halteelementteil
- 34: Schienenkopf
- 36: Nut
- 37: Zapfen
- 38: Federelement
- 40, 40': Federende
- 42: Fachteilersegment
- 44: Gewindestange
- 46: Handteil
- 47: Öffnung
- 48: Anlauf
- 50: Kraftfahrzeugablage
- 52: Stauraum
- 54: Randstück
- 56: Kragen
- 58: Seitenwand
- 60: Bodenteil

- a,b: Abstand

## Patentansprüche

1. Fahrzeugablagefachteiler (10) mit einem Fachteiler (12) zum zumindest teilweisen Abteilen eines Stauraums (52) innerhalb einer Kraftfahrzeugablage (50),
- wobei der Fachteiler (12) ein Halteelement (14) aufweist zum zeitweisen Festsetzen des Fahrzeugablagefachteilers (10) an einem Randstück (54) der Kraftfahrzeugablage (50) und der Fachteiler (12) in dieser Gebrauchsstellung von dem Halteelement (14) abgestützt ist,
- und eine Anlagefläche (16) von dem Halteelement (14) zum Ansetzen des Fachteilers (12) an dem Randstück (54) bereitgestellt ist,
- und sich ein Steg (20) des Halteelements (14) an die Anlagefläche (16) anschließt und in etwa parallel zum Fachteiler (12) verläuft, welcher in der Gebrauchsstellung das Randstück (54) überdeckt
- und ein Arm (22) an den Steg (20) angeformt ist,
**dadurch gekennzeichnet, dass**
- ein Abstand (a) zwischen der Anlagefläche (16) und eine zur Anlagefläche (16) gegenüberliegende Seite (18) des Arms (22) beim Einsetzen des Randstücks (54) zwischen Anlagefläche (16) und dem Arm (22) vergrößert ist,
- wobei der Steg (20) eine Verformungsenergie speichert und die Anlagefläche (16) und die Seite (18) gegeneinanderdrückt.

2. Fahrzeugablagefachteiler (10) nach Anspruch 1, **dadurch gekennzeichnet, dass** der Steg (20) des Halteelements (14) aus einem dauerelastischen Material hergestellt ist, vorgespannt und bei Veränderung des Abstands (a) reversibel verformbar ist.

3. Fahrzeugablagefachteiler (10) nach Anspruch 1 oder 2, **dadurch gekennzeichnet, dass** ein Lager (26) von dem Steg (20) bereitgestellt ist und der Arm (22) des Halteelements (14) und/oder der Fachteiler (12) daran drehbar gelagert ist und von einer Feder (24) vorgespannt ist, wobei der Arm (22) und/oder der Fachteiler (12) mit einer Handhabe (28) versehen ist, die dazu ausgebildet ist, den Arm (22) und/oder den Fachteiler (12) zu drehen und dabei der Abstand (a) veränderlich ist.

4. Fahrzeugablagefachteiler (10) nach Anspruch 3, **dadurch gekennzeichnet, dass** die Feder (24) um das Lager (26) herum angeordnet ist und der Fachteiler (12) einen um das Lager (26) drehbaren Finger (13) umfasst, dessen freies Ende von der Feder (24) gegen den Arm (22) gedrückt ist.

5. Fahrzeugablagefachteiler (10) nach einem der Ansprüche 1 bis 3, **dadurch gekennzeichnet, dass** der Steg (20) einen kreisförmigen oder ovalen Querschnitt aufweist und zumindest teilweise flächig ausgebildet ist, wobei in Gebrauchsstellung des Fahrzeugablagefachteilers (10) der Steg (20) einen Teil eines Kragens (56) vom Randstück (54) umgreift.

6. Fahrzeugablagefachteiler (10) nach einem der Ansprüche 1 bis 3 und 5, **dadurch gekennzeichnet, dass** das Haltelement (14) von einem ersten Halteelementteil (30) und einem zweiten Halteelementteil (32) gebildet ist, wobei das erste Haltelementteil (30) in Gebrauchsstellung am Randstück (54) des Kraftfahrzeugablagefachs (50) festzusetzen ist und einen Schienenkopf (34) oder eine Nut (36) aufweist, die sich nach Befestigen am Kraftfahrzeugablagefach (50) entlang des Randstücks (54) erstreckt und der Fachteiler (12) mittels des zweiten Halteelementteils (32) mit dem Steg (20) und dem Arm (22) an dem Schienenkopf (34) oder der Nut (36) per Klemmung festzusetzen ist.

7. Fahrzeugablagefachteiler (10) nach einem der Ansprüche 1 bis 6, **dadurch gekennzeichnet, dass** ein mehrteiliger Fachteiler (12) mittels eines Federelements (38), dass mit einem Federende (40) am ersten Fachteilersegment (42) angesetzt ist und ein anderes Federende (40') des Federelements (38) mit dem letzten Fachteilersegment (42) verbunden ist, wobei eine Breite des Fachteilers (12) mittels Spannen oder mittels Entspannens des Federelements (38) veränderlich ist.

8. Fahrzeugablagefachteiler (10) nach einem der Ansprüche 1 bis 7, **dadurch gekennzeichnet, dass** der Fachteiler (12) mehrteilig aus ineinander schiebbaren Fachteilersegmenten (42) zusammengesetzt ist und eines der Fachteilersegmente (42) mit einer Gewindestange (44) so verbunden ist, dass die Gewindestange (44) bei einer Drehung in eine Drehrichtung ihren Abstand (b) zu einem an der Gewindestange (44) angeordneten Handteil (46) verkürzt und bei Drehung in gegenläufiger Drehrichtung ihren Abstand (b) zum Handteil (46) verlängert, so dass durch eine Betätigung des Handteils (46) eine Drehbewegung der Gewindestange (44) entsteht und dabei die Breite des Fachteilers (12) variiert.

9. Fahrzeugablagefachteiler (10) nach einem der Ansprüche 1 bis 7, **dadurch gekennzeichnet, dass** der Fachteiler (12) mindestens eine in Längsrichtung und/oder in Querrichtung zur Anlagefläche (16) des Fachteilers (12) verlaufende Sollbruchstelle (17) zum vorbestimmten Abbrechen eines Fachteilerstücks und zum Verkleinern des Fachteilers (12) aufweist.

10. Fahrzeugablagefachteiler (10) nach einem der Ansprüche 1 bis 9, **dadurch gekennzeichnet, dass** der Fachteiler (12), der Finger (13) am freien Ende oder der Arm (22) einen Anlauf (48) aufweist.

11. Fahrzeugablagefachteiler (10) nach einem der Ansprüche 1 bis 10, **dadurch gekennzeichnet, dass** die Anlagefläche (16), zumindest eine zur Anlagefläche (16) weisende Stegfläche, die Seite (18) des Arms (22) oder das freie Ende des Fingers (13) mit einem rutschhemmenden Material belegt ist.

12. Fahrzeugablagefachteiler (10) nach einem der Ansprüche 1 bis 11, **dadurch gekennzeichnet, dass** der Steg (20) und/oder der Arm (22) aus einem transparenten Material hergestellt ist.

13. Kraftfahrzeugablage (50) mit einem Fahrzeugablagefachteiler (10) nach einem der vorstehenden Ansprüche 1 bis 12.

## Claims

1. Vehicle storage compartment divider (10) with a compartment divider (12) for at least partially partitioning a storage space (52) within a motor vehicle storage compartment (50),
- wherein the compartment divider (12) has a retaining element (14) for temporarily securing the vehicle storage compartment divider (10) to an edge piece (54) of the motor vehicle storage compartment (50), and the compartment divider (12) is supported by the retaining element (14) in this position of use,
- and a contact surface (16) is provided by the retaining element (14) for attaching the compartment divider (12) to the edge piece (54),
- and a bridge (20) of the retaining element (14) adjoins the contact surface (16) and runs approximately parallel to the compartment divider (12), which covers the edge piece (54) in position of use,
- and an arm (22) is formed on the bridge (20),
**characterized in that**
- a distance (a) between the contact surface (16) and a side (18) of the arm (22) opposite the contact surface (16) is enlarged when the edge piece (54) is inserted between the contact surface (16) and the arm (22),
- wherein the bridge (20) is storing deformation energy and presses the contact surface (16) and the side 18 against each other.

2. Vehicle storage compartment divider (10) according to claim 1, **characterized in that** the bridge (20) of the retaining element (14) is made of a permanently elastic material, is prestressed and is reversibly deformable when the distance (a) is changed.

3. Vehicle storage compartment divider (10) according to claim 1 or 2, **characterized in that** a bearing (26) is provided by the bride (20) and the arm (22) of the retaining element (14) and/or the compartment divider (12) is mounted rotatably thereon and is preloaded by a spring (24), wherein the arm (22) and/or the compartment divider (12) is provided with a handle (28) which is designed to rotate the arm (22) and/or the compartment divider (12), thereby the distance (a) is changeable.

4. Vehicle storage compartment divider (10) according to claim 3, **characterized in that** the spring (24) is arranged around the bearing (26) and the compartment divider (12) comprises a finger (13) rotatable around the bearing (26), the free end of which is pressed against the arm (22) by the spring (24).

5. Vehicle storage compartment divider (10) according to one of claims 1 to 3, **characterized in that** the bridge (20) has a circular or oval cross-section and is at least partially shaped flat wherein, in the operating position of the vehicle storage compartment divider (10), the bridge (20) encompasses a part of a collar (56) of the edge piece (54).

6. Vehicle storage compartment divider (10) according to one of claims 1 to 3 and 5, **characterized in that** the retaining element (14) is formed by a first retaining element part (30) and a second retaining element part (32), wherein the first retaining element part (30) is to be fixed in the operating position to the edge piece (54) of the motor vehicle storage compartment (50) and has a rail head (34) or a groove (36) which extends along the edge piece (54) after being attached to the vehicle storage compartment (50) and the compartment divider (12) is to be fixed by means of the second retaining element part (32) with the bridge (20) and the arm (22) to the rail head (34) or the groove (36) by clamping.

7. Vehicle storage compartment divider (10) according to one of claims 1 to 6, **characterized in that** a multi-part compartment divider (12) is connected by means of a spring element (38) which is attached to the first compartment divider segment (42) with a spring end (40) and another spring end (40') of the spring element (38) is connected to the last compartment divider segment (42), wherein a width of the compartment divider (12) is variable by tensioning or by relaxing the spring element (38).

8. Vehicle storage compartment divider (10) according to one of claims 1 to 7, **characterized in that** the compartment divider (12) is composed of multiple compartment divider segments (42) that can be pushed into one another, and one of the compartment divider segments (42) is connected to a threaded rod (44) in such a way that, when rotated in one direction, the threaded rod (44) shortens its distance (b) to a handpiece (46) arranged on the threaded rod (44) and, when rotated in the opposite direction, increases its distance (b) from the handpiece (46), so that actuating the handpiece (46) causes the threaded rod (44) to rotate, thereby varying the width of the compartment divider (12).

9. Vehicle storage compartment divider (10) according to one of claims 1 to 7, **characterized in that** the compartment divider (12) has at least one predetermined breaking point (17) running in the longitudinal direction and/or in the transverse direction to the contact surface (16) of the compartment divider (12) for the predetermined breaking off of a compartment divider piece and for reducing the size of the compartment divider (12).

10. Vehicle storage compartment divider (10) according to one of claims 1 to 9, **characterized in that** the compartment divider (12), the finger (13) at the free end or the arm (22) has a ramp (48).

11. Vehicle storage compartment divider (10) according to one of claims 1 to 10, **characterized in that** the contact surface (16), at least a bridge surface pointing towards the contact surface (16), the side (18) of the arm (22) or the free end of the finger (13) is covered with an anti-slip material.

12. Vehicle storage compartment divider (10) according to one of claims 1 to 11, **characterized in that** the bridge (20) and/or the arm (22) is made of a transparent material.

13. Motor vehicle storage compartment (50) with a vehicle storage compartment divider (10) according to one of the preceding claims 1 to 12.

## Revendications

1. Séparateur de compartiment de rangement de véhicule (10) comprenant un séparateur de compartiment (12) destiné à diviser au moins partiellement un espace de rangement (52) à l'intérieur d'un compartiment de rangement de véhicule automobile (50),
- le séparateur (12) comportant un élément de maintien (14) pour fixer temporairement le séparateur de compartiment de rangement de véhicule (10) à une pièce de bord (54) du compartiment de rangement de véhicule automobile (50) et le séparateur de compartiment (12) étant soutenu dans cette position d'utilisation par l'élément de maintien (14),
- et une surface de contact (16) est prévue sur l'élément de maintien (14) pour fixer le séparateur de compartiment (12) sur la pièce de bord (54),
- et une âme (20) de l'élément de maintien (14) se raccorde à la surface de contact (16) et s'étend à peu près parallèlement au séparateur de compartiment (12) qui, en position d'utilisation, recouvre la pièce de bord (54)
- et un bras (22) est formé sur l'âme (20),
**caractérisé en ce que**
- une distance (a) entre la surface de contact (16) et un côté (18) du bras (22) opposé à la surface de contact (16) est augmentée lors de l'insertion de la pièce de bord (54) entre la surface de contact (16) et le bras (22),
- l'âme (20) emmagasinant une énergie de déformation et pressant la surface de contact (16) et le côté (18) l'un contre l'autre.

2. Séparateur de compartiment de rangement de véhicule (10) selon la revendication 1, **caractérisé en ce que** l'âme (20) de l'élément de maintien (14) est faite d'un matériau élastique permanent, est précontrainte et est déformable de manière réversible lorsque la distance (a) est modifiée.

3. Séparateur de compartiment de rangement de véhicule (10) selon la revendication 1 ou 2, **caractérisé en ce qu'**un palier (26) est fourni par l'âme (20) et le bras (22) de l'élément de maintien (14) et/ou du séparateur de compartiment (12) est monté de manière rotative sur celui-ci et est précontraint par un ressort (24), dans lequel le bras (22) et/ou le séparateur de compartiment (12) est muni d'une poignée (28) conçue pour faire tourner le bras (22) et/ou le séparateur de compartiment (12) par lequel la distance (a) est variable.

4. Séparateur de compartiment de rangement de véhicule (10) selon la revendication 3, **caractérisé en ce que** le ressort (24) est disposé autour du palier (26) et le séparateur de compartiment (12) comprend un doigt (13) rotatif autour du palier (26) dont l'extrémité libre est pressée contre le bras (22) par le ressort (24).

5. Séparateur de compartiment de rangement de véhicule (10) selon l'une des revendications 1 à 3, **caractérisé en ce que** l'âme (20) a une section transversale circulaire ou ovale et est au moins partiellement plane, dans laquelle, en position de fonctionnement du séparateur de compartiment de rangement de véhicule (10), l'âme (20) englobe une partie d'un collier (56) de la pièce de bord (54).

6. Séparateur de compartiment de rangement de véhicule (10) selon l'une des revendications 1 à 3 et 5, **caractérisé en ce que** l'élément de maintien (14) est formé d'une première partie d'élément de maintien (30) et d'une deuxième partie d'élément de maintien (32), la première partie d'élément de maintien (30) étant fixée en position de fonctionnement sur la pièce de bord (54) du compartiment de rangement de véhicule automobile (50) et comportant une tête de rail (34) ou une rainure (36) qui s'étend le long de la pièce de bord (54) après avoir été fixée au compartiment de rangement de véhicule automobile (50), et le séparateur de compartiment (12) étant fixé au moyen de la deuxième partie d'élément de maintien (32) avec l'âme (20) et le bras (22) sur la tête de rail (34) ou la rainure (36) par serrage.

7. Séparateur de compartiment de rangement de véhicule (10) selon l'une des revendications 1 à 6, **caractérisé en ce qu'**un séparateur de compartiment (12) en plusieurs parties est relié au moyen d'un élément de ressort (38) qui est fixé au premier segment de séparateur de compartiment (42) avec une extrémité à ressort (40) et une autre extrémité à ressort (40') de l'élément à ressort (38) est reliée au dernier segment de séparateur de compartiment (42), dans lequel la largeur du séparateur de compartiment (12) est variable en tendant ou en relâchant l'élément à ressort (38).

8. Séparateur de compartiment de rangement de véhicule (10) selon l'une des revendications 1 à 7, **caractérisé en ce que** le séparateur de compartiment (12) est composé de plusieurs parties constituées de segments de séparateur de compartiment (42) coulissants et l'un des segments de séparateur de compartiment (42) est relié à une tige filetée (44) de sorte que la tige filetée (44) raccourcisse sa distance (b) à une pièce à main (46) disposée sur la tige filetée (44) lorsqu'elle est tournée dans un sens et allonge sa distance (b) à la pièce à main (46) lorsqu'elle est tournée dans le sens opposé, de sorte qu'une actionnement de la pièce à main (46) provoque un mouvement de rotation de la tige filetée (44) et fait ainsi varier la largeur du séparateur de compartiment (12).

9. Séparateur de compartiment de rangement de véhicule (10) selon l'une des revendications 1 à 7, **caractérisé en ce que** le séparateur de compartiment (12) comporte au moins un point de rupture (17) s'étendant dans la direction longitudinale et/ou dans la direction transversale jusqu'à la surface de contact (16) du séparateur de compartiment (12) pour la rupture d'un morceau de séparateur de compartiment et pour réduire la taille du séparateur de compartiment (12).

10. Séparateur de compartiment de rangement de véhicule (10) selon l'une des revendications 1 à 9, **caractérisé en ce que** le séparateur de compartiment (12), le doigt (13) à l'extrémité libre ou le bras (22) comporte une rampe (48).

11. Séparateur de compartiment de rangement de véhicule (10) selon l'une des revendications 1 à 10, **caractérisé en ce que** la surface de contact (16), au moins une surface de l'âme pointant vers la surface de contact (16), le côté (18) du bras (22) ou l'extrémité libre du doigt (13) est recouvert d'un matériau antidérapant.

12. Séparateur de compartiment de rangement de véhicule (10) selon l'une des revendications 1 à 11, **caractérisé en ce que** l'âme (20) et/ou le bras (22) sont fabriqués dans un matériau transparent.

13. Compartiment de rangement pour véhicule automobile (50) avec un séparateur de compartiment de rangement pour véhicule (10) selon l'une des revendications précédentes 1 à 12.
